(19) Europäisches Patentamt
European Patent Office
Office européen des brevets

(11) Numéro de publication : **0 132 211**
**B1**

(12) # FASCICULE DE BREVET EUROPÉEN

(45) Date de publication du fascicule du brevet :
19.08.87

(51) Int. Cl.⁴ : **A 01 D 78/10**

(21) Numéro de dépôt : **84440023.4**

(22) Date de dépôt : **25.05.84**

(54) **Machine de fenaison perfectionnée pour le fanage.**

(30) Priorité : **19.07.83 FR 8312036**

(43) Date de publication de la demande :
**23.01.85 Bulletin 85/04**

(45) Mention de la délivrance du brevet :
**19.08.87 Bulletin 87/34**

(84) Etats contractants désignés :
**AT BE DE FR GB IT NL**

(56) Documents cités :
**GB-A- 2 005 523**
**GB-A- 2 065 435**
**GB-A- 2 065 436**

(73) Titulaire : **KUHN S.A.**
**4, Impasse des Fabriques**
**F-67700 Saverne (FR)**

(72) Inventeur : **Aron, Jérôme**
**3, Rue des Comtes de Rosen Dossenheim-sur-Zinsel**
**F-67330 Bouxwiller (FR)**

(74) Mandataire : **Andres, Jean-Claude**
**KUHN S.A. 4, Impasse des Fabriques**
**F-67700 Saverne (FR)**

## Description

La présente invention concerne les machines de fenaison comportant au moins deux tambours munis à leur partie inférieure d'une jupe souple et d'éléments entraîneurs répartis sur leur périphérie en vue de ramasser et de déplacer des végétaux couchés sur le sol.

Les machines connues de ce genre conviennent parfaitement pour des travaux tels que l'andainage, le déplacement ou le retournement d'andains ou le ramassage de fourrage. Elles présentent notamment les avantages de traiter les végétaux en douceur et de ne pas avoir de dents métalliques en contact avec le sol durant le travail.

Ces machines ne sont cependant pas encore en état d'assurer un fanage de bonne qualité. Pour cette opération il est nécessaire de retourner et de bien étaler le fourrage pour l'exposer convenablement au soleil.

Des machines de ce genre qui sont décrites dans la demande de brevet GB-A-2 065 435 comportent des moyens associés aux jupes en vue de faner ou conditionner les végétaux. Ces moyens sont constitués par des éléments entraîneurs de végétaux disposés au-dessus des jupes. Sur ces machines, la masse essentielle des végétaux déplacés reste cependant au voisinage immédiat des jupes. De ce fait, l'action des entraîneurs sur les végétaux est relativement peu importante. Il s'ensuit un mauvais étalement des végétaux sur le côté arrière de ces machines, une grande quantité de ces végétaux étant concentrée au milieu de chaque bande travaillée. Cette concentration retarde leur séchage. L'effet recherché par le fanage n'est pas atteint d'une manière satisfaisante avec ces machines.

Les machines décrites dans la demande de brevet GBA-2 065 436 comportent des moyens associés aux jupes en vue de faner et andainer les végétaux. Ces moyens sont constitués par des éléments entraîneurs de végétaux disposés au-dessus des jupes et réglables dans deux positions différentes, l'une pour le fanage et l'autre pour l'andainage. Cependant, sur ces machines, les végétaux ne sont également que partiellement dispersés au fanage. La présente invention a pour but de proposer une machine permettant de retourner et d'étaler uniformément les végétaux à l'arrière de la machine.

A cet effet, une importante caractéristique de l'invention consiste à prévoir sur chaque machine des moyens situés au moins partiellement sous les jupes et qui provoquent en coopération avec les jupes une élévation des végétaux déplacés dans une zone située entre les tambours de manière à amener ces végétaux en contact avec les entraîneurs assurant leur fanage.

Cette élévation amène les végétaux dans la trajectoire des entraîneurs fixés sur les tambours. Ceux-ci ont alors une bonne prise sur ces végétaux, ce qui leur permet de bien les étaler derrière la machine.

En sus, en raison de cette élévation dont la hauteur par rapport au sol est égale ou supérieure à 8 centimètres, les végétaux subissent un réel retournement avant de retomber sur le sol.

Grâce à leur situation sous les jupes, ces moyens ne sont pratiquement pas en contact avec les végétaux et ne gènent nullement leur déplacement.

Lesdits moyens provoquant l'élévation des végétaux sont avantageusement réglables dans différentes positions et/ou démontables. Ils peuvent ainsi être adaptés aux différentes conditions de travail. En sus, la machine peut être utilisée pour d'autres travaux tels que l'andainage, le déplacement ou le retournement d'andains ou le ramassage.

Selon une autre caractéristique de l'invention des éléments de guidage de préférence également réglables et/ou démontables sont associés à ces moyens. Ces éléments dirigent les végétaux vers les côtés afin d'obtenir un étalement plus uniforme. En sus, ils empêchent la retombée immédiate des végétaux sur le sol dès qu'ils quittent les jupes. Cela favorise leur préhension par les entraîneurs.

Selon une autre caractéristique de l'invention les entraîneurs sont articulés dans des logements prévus sur les tambours au moyen d'axes situés dans leur prolongement ou qui leur sont pratiquement parallèles. Ces logements sont dirigés vers la direction opposée au sens de rotation du tambour correspondant et vers le bas.

Ce montage permet de régler ces entraîneurs dans au moins deux positions. Dans l'une de ces positions les extrémités des entraîneurs qui sont dirigées vers les tambours sont pratiquement tangentes aux parois de ces tambours et leurs autres extrémités sont pratiquement radiales. Cette position sera choisie pour le fanage. Dans l'autre position, qui est obtenue par une simple rotation autour de leur axe d'articulation, ils sont entièrement dirigés vers la direction opposée au sens de rotation et vers le bas. Cette position convient pour l'andainage vu qu'ils sont moins agressifs à l'égard des végétaux.

D'autres caractéristiques et avantages de l'invention ressortiront de la description ci-après, avec référence aux dessins annexés qui représentent, à titre d'exemples non limitatifs, plusieurs formes de réalisation de l'invention.

Dans ces dessins :

La figure 1 représente une vue de dessus d'un premier exemple de réalisation,

La figure 2 représente une vue arrière, avec une coupe partielle, de cet exemple de réalisation,

La figure 3 représente une coupe suivant le plan III-III de la figure 1,

La figure 4 représente une vue arrière, avec une coupe partielle, d'une variante de réalisation,

La figure 5 représente une vue semblable à la figure 4, d'une autre variante de réalisation,

La figure 6 représente une vue de dessus d'un autre exemple de réalisation,

La figure 7 représente une vue arrière, avec une coupe partielle, de l'exemple de réalisation selon la figure 6,

La figure 8 représente une coupe suivant le plan VIII-VIII de la figure 6,

La figure 9 représente une vue de dessus d'un autre exemple de réalisation,

La figure 10 représente une coupe suivant le plan X-X de la figure 9,

La figure 11 représente une vue de détail d'un guide de l'exemple selon les figures 9 et 10,

La figure 12 représente une coupe semblable à celle de la figure 8, d'un autre exemple de réalisation,

La figure 13 représente une vue arrière, avec une coupe partielle, d'une variante de réalisation,

La figure 14 représente, à plus grande échelle, une vue de détail d'un entraîneur selon l'invention,

La figure 15 représente une vue de détail d'une variante de réalisation des entraîneurs,

La figure 16 représente une coupe d'un autre exemple de réalisation,

La figure 17 représente une coupe d'un autre exemple de réalisation,

La figure 18 représente une vue de dessus d'un autre exemple de réalisation de l'invention et,

La figure 19 représente une vue arrière, avec une coupe partielle, de l'exemple de réalisation de la figure 18.

Telle qu'elle est représentée sur les figures annexées, la machine selon l'invention comporte deux tambours (1 et 2) reliés entre eux au moyen d'un châssis (3). Ce châssis est lui-même relié à un chevalet d'attelage (4) au moyen d'une poutre de liaison (5). Ledit chevalet comporte deux points d'accrochage inférieurs (6 et 7) et un point d'accrochage supérieur (8) pour l'accouplement au dispositif d'attelage trois points d'un tracteur non représenté. La position de ce chevalet (4) par rapport à la poutre de liaison (5) peut être définie au moyen d'une entretoise (9). Sous chaque tambour (1 et 2) est prévue une roulette (10 et 11) permettant à la machine de se déplacer sur le sol dans le sens d'avancement (A).

Durant le travail, les deux tambours (1 et 2) sont entraînés en rotation suivant les flèches (F et G), autour d'axes (12 et 13) légèrement inclinés vers l'avant — vu dans le sens d'avancement (A) —. Cet entraînement est réalisé, d'une manière connue en soi, à partir de l'arbre de prise de force du tracteur. Ledit arbre est relié au moyen d'un arbre à cardan (non représenté) à un bout d'arbre cannelé (14) qui s'engage dans un carter de renvoi (15) du châssis (3). Cet arbre entraîne le tambour (1) au moyen d'un pignon conique et d'une roue dentée logés dans ledit carter. L'entraînement du tambour (2) est réalisé au moyen d'un arbre de transmission logé dans le châssis (3). Cet arbre comporte à son extrémité située dans le carter de renvoi (15) un pignon conique qui engrène avec la couronne dentée précitée et, à son autre extrémité qui s'étend dans un carter de renvoi (16) surmontant le tambour (2), un deuxième pignon conique en prise avec une couronne dentée solidaire dudit tambour (2).

Chacun de ces tambours (1 et 2) porte à sa partie inférieure une jupe souple (17 et 18) et, sur sa périphérie des entraîneurs (19 et 20) en vue de ramasser et de déplacer des végétaux couchés sur le sol. Durant le travail ces jupes (17 et 18) plongent sous lesdits végétaux, épousent parfaitement les dénivellations du sol et transportent les végétaux sur leur face supérieure.

Lesdites jupes (17 et 18) comportent à leur bord extérieur des protubérances (21 et 22) et, sur leur face supérieure des nervures (23 et 24) pour favoriser le déplacement des végétaux.

Conformément à la présente invention, la machine possède des moyens (25) qui provoquent une élévation desdits végétaux dans une zone située entre les tambours (1 et 2), de manière à les amener en contact avec les entraîneurs (19 et 20) assurant leur fanage. Grâce à cette élévation lesdits entraîneurs (19 et 20) ont une très bonne prise sur l'ensemble des végétaux déplacés. Cela permet auxdits entraîneurs de traiter ces végétaux très énergiquement et de les étaler sur une grande largeur afin d'accélérer le cycle de séchage. La hauteur (H) de l'élévation par rapport au sol est au moins égale à 8 centimètres. De bons résultats ont été obtenus avec des hauteurs (H) comprises entre 8 et 30 centimètres. Cette élévation permet aussi un meilleur retournement que celui qu'on obtient avec une simple projection au ras du sol.

Lesdits moyens (25) se situent sous les jupes (17 et 18) des tambours (1 et 2). Ainsi, ils ne sont pratiquement pas en contact avec les végétaux et ne gênent nullement leur déplacement.

Selon une caractéristique de l'invention, ces moyens (25) sont constitués par un dispositif soulevant les jupes (17 et 18) des tambours (1 et 2) dans une zone située derrière un plan (P) passant par les axes (12 et 13) de ces tambours. Les végétaux transportés sur la face supérieure de ces jupes (17 et 18) sont alors soulevés d'une manière similaire.

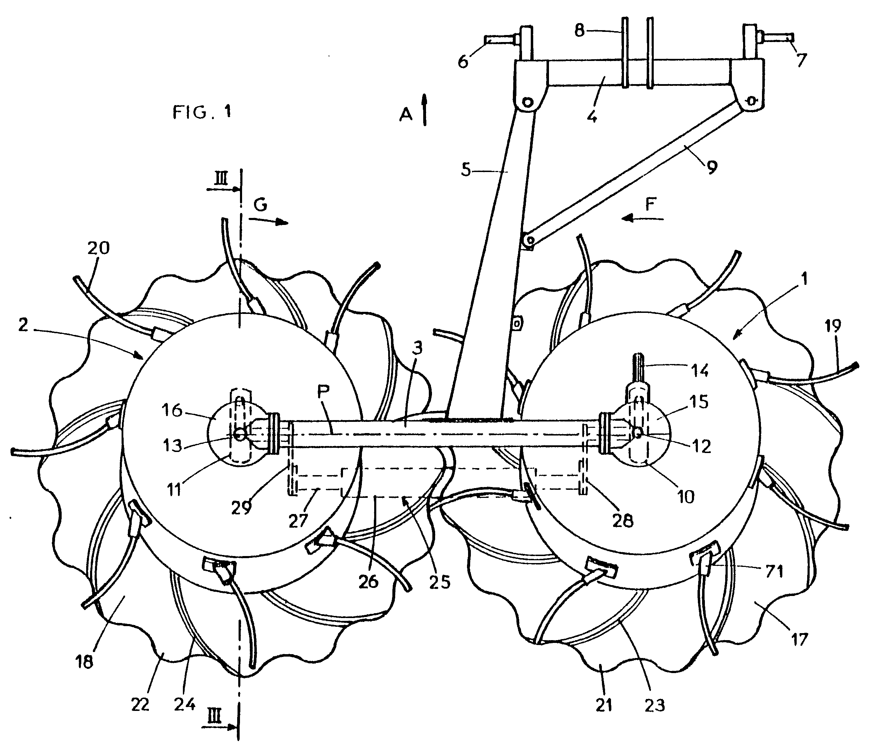

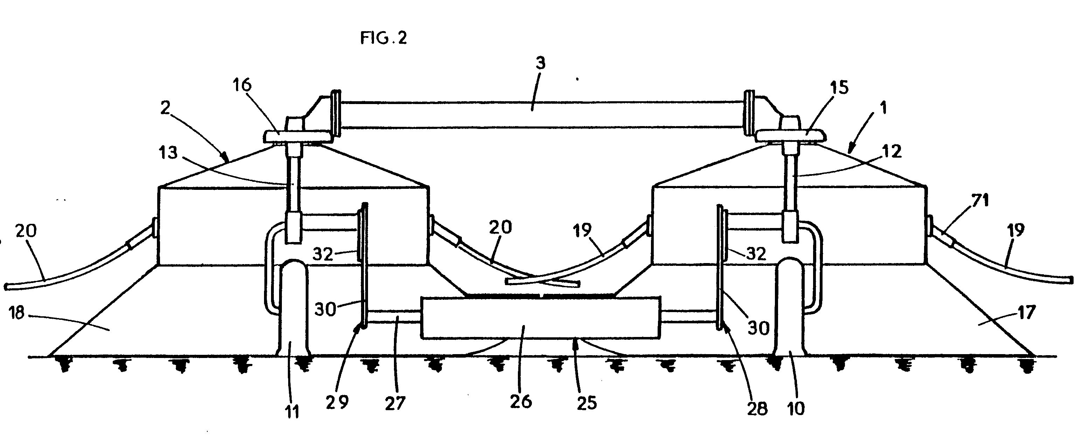

Dans l'exemple de réalisation des figures 1 à 3, ces moyens (25) sont constitués par au moins un rouleau (26). On peut utiliser deux ou davantage de rouleaux pour allonger la zone d'élévation. Ce rouleau (26) est monté libre en rotation sur un axe (27). Les extrémités de cet axe (27) sont guidées dans des supports latéraux (28 et 29) reliés aux axes (12 et 13) des tambours (1 et 2). Durant le travail le rouleau (26) est entraîné en rotation par les jupes (17 et 18). Cette rotation évite un important frottement des jupes (17 et 18) sur le rouleau (26) et donc leur usure.

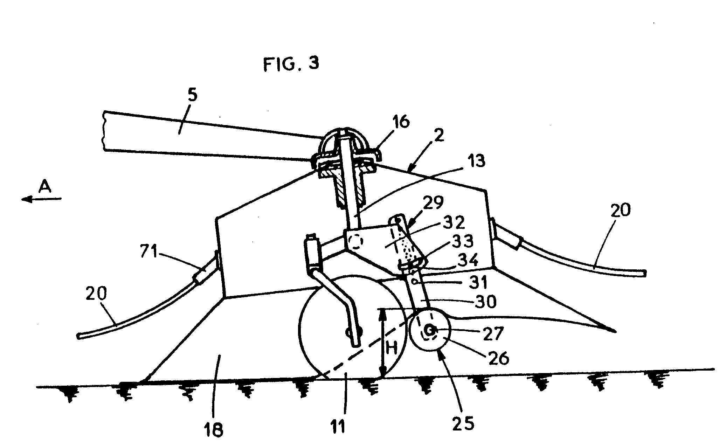

Comme cela ressort notamment de la figure 3, la position du rouleau (26) est réglable. Ce réglage permet de choisir la hauteur de soulèvement et/ou de modifier sa localisation en fonction de la nature et du volume des végétaux déplacés. A cet effet, les supports latéraux (28 et 29) comportent des longerons (30) présentant plusieurs trous (31) décalés en hauteur et, des plaques (32) munies chacune d'un trou oblong (33). Les trous (31) permettent de modifier la hauteur du rouleau (26) par rapport au sol tandis que le trou oblong (33) permet de modifier sa position vers l'avant ou vers l'arrière par rapport au sens de déplacement (A).

Le rouleau (26) est avantageusement démontable. Pour cela il suffit de séparer les longerons (30) des plaques (32) en dévissant les boulons (34). La machine peut alors être utilisée pour des travaux tels que l'andainage, le déplacement ou le retournement d'andains ou le ramassage de végétaux.

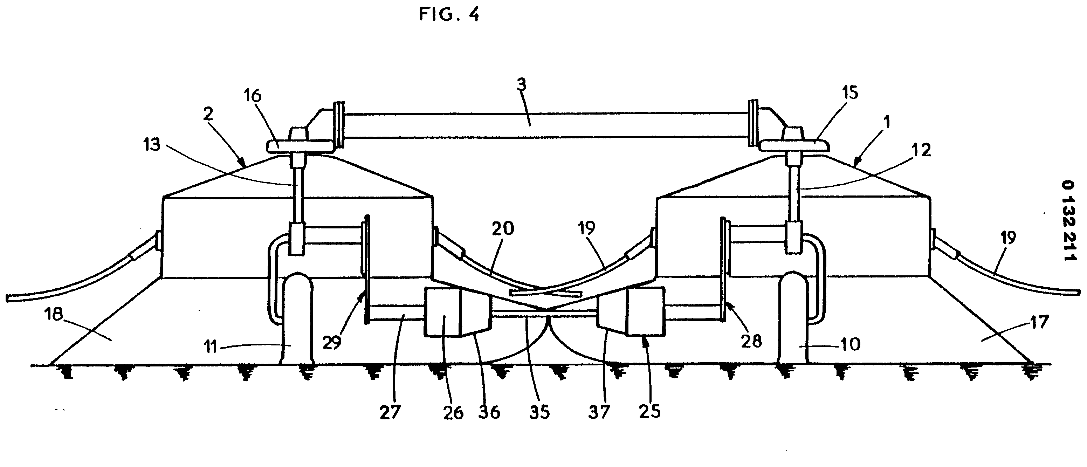

Dans la variante de réalisation selon la figure 4, le rouleau (26) comporte une large gorge centrale (35). En sus, chaque partie latérale restante comporte une surface inclinée (36 et 37). Ces surfaces sont en contact avec les jupes (17 et 18) et provoquent leur soulèvement. Ce mode de réalisation assure une meilleure répartition sur toute la largeur des jupes (17 et 18) du frottement qu'elles subissent. En effet, les bords extérieurs des jupes (17 et 18) qui sont en contact avec le sol dans la moitié avant de leur trajectoire, ne sont soumis à aucun frottement en passant sur le rouleau (26). Cette répartition permet de prolonger la durée d'utilisation des jupes (17 et 18).

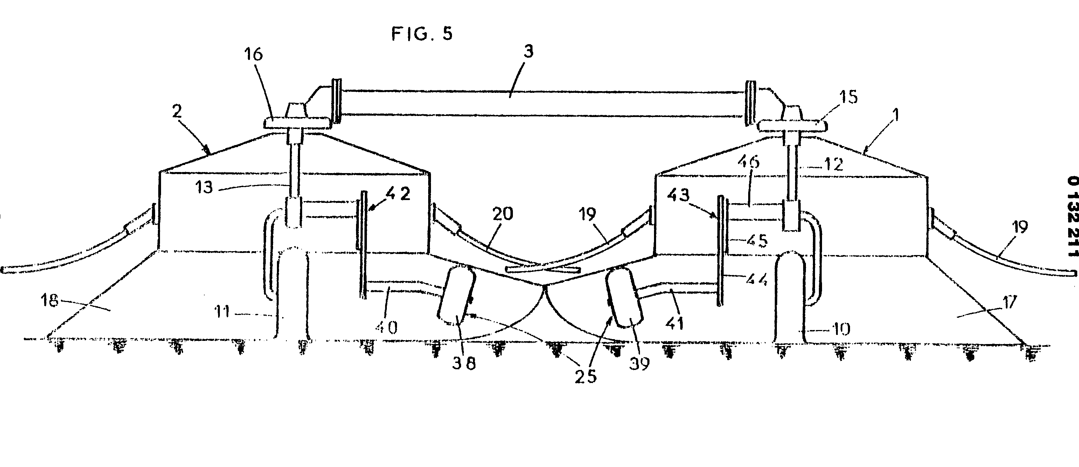

Dans la variante selon la figure 5, les moyens (25) qui soulèvent les jupes (17 et 18) sont constitués par des roues ou galets (38 et 39). Ces galets (38, 39) sont montés libre en rotation sur des axes (40 et 41) reliés aux axes (12 et 13) des tambours (1 et 2). Cette liaison est assurée au moyen de supports (42 et 43) se composant chacun d'un longeron (44), d'une plaque (45) et d'une entretoise (46). La position de ces galets (38, 39) est réglable par déplacement des longerons (44). Ils peuvent aussi être démontés pour supprimer le soulèvement des jupes (17 et 18) au cas où l'opérateur désire utiliser la machine pour un autre travail que le fanage. Ces galets (38 et 39) permettent aussi une répartition des frottements sur pratiquement toute la largeur des jupes (17 et 18).

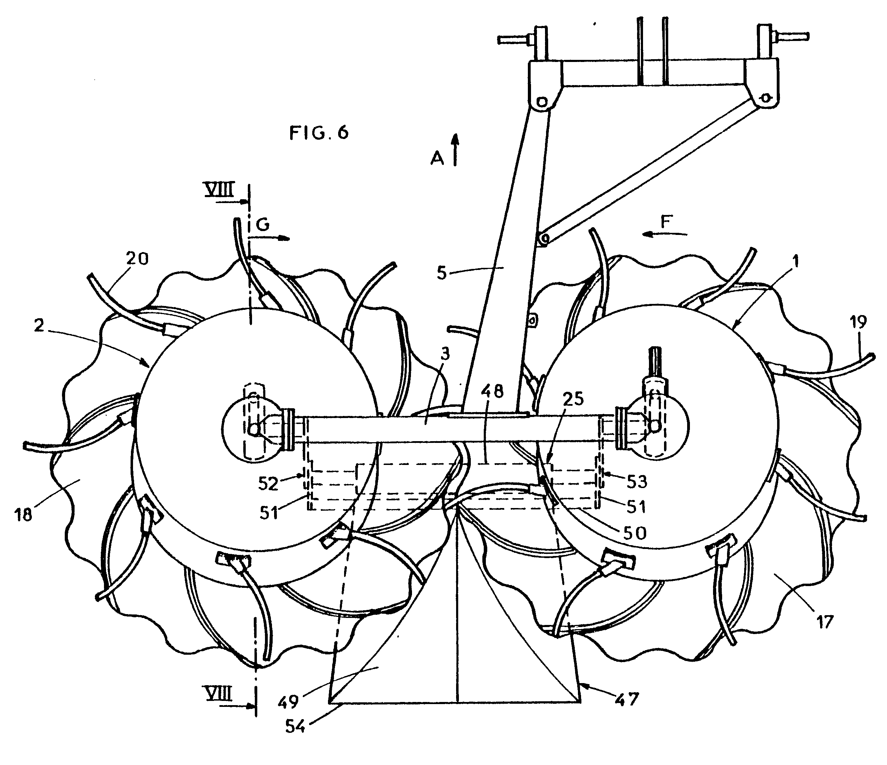

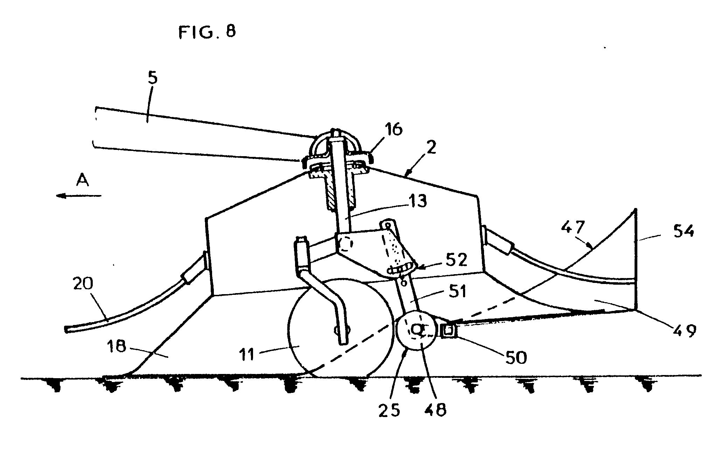

L'exemple de réalisation selon les figures 6 à 8 se différencie des exemples précédents par la présence d'un élément de guidage (47). Cet élément est associé aux moyens (25) qui sont constitués dans cet exemple par un rouleau (48), afin d'améliorer l'étalement des végétaux derrière la machine.

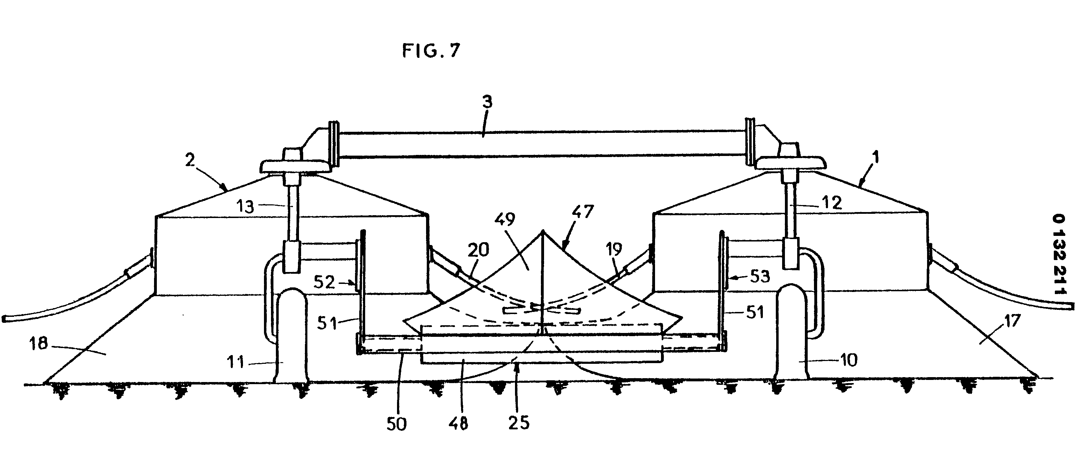

L'élément de guidage (47) est constitué par une plaque ou tôle déflectrice (49) placée à l'arrière du rouleau (48). Cette tôle est fixée à une traverse (50) qui est reliée aux longerons (51) des supports latéraux (52 et 53) du rouleau (48). La tôle déflectrice (49) et le rouleau (48) forment un ensemble. Ladite tôle (49) s'étend vers l'arrière, de préférence au-delà des jupes (17 et 18), en passant partiellement sous ces dernières. Sa partie arrière (54) est plus large et plus élevée que sa partie avant qui est dirigée vers le rouleau (48). Comme cela ressort clairement de la figure 7, cette tôle (49) a une section en forme de V dont la pointe est dirigée vers le haut.

Ladite tôle (49) empêche ainsi les végétaux de retomber sur le sol immédiatement après avoir quitté les jupes (17 et 18). Grâce à sa forme elle guide ces végétaux vers les côtés pour obtenir une couche plus uniforme sur toute la largeur de la bande travaillée.

Cet élément de guidage (47) peut également être constitué par des tiges placées côte à côte ou même par des moyens animés.

Le rouleau (48) et l'élément de guidage (47) sont réglables et/ou démontables de la même manière que le rouleau (26) de l'exemple selon les figures 1 à 3.

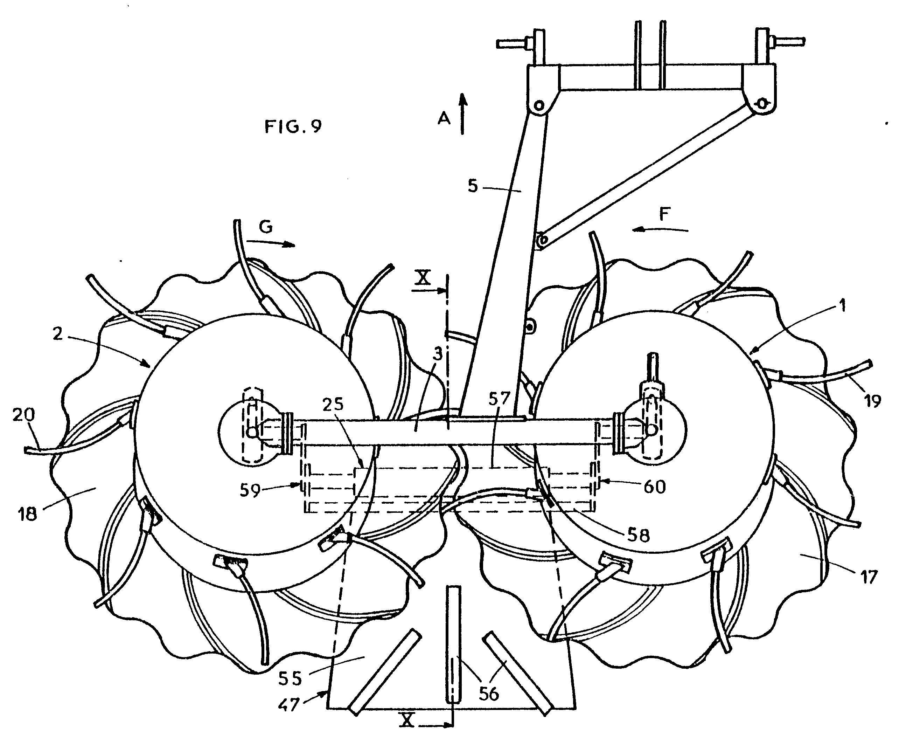

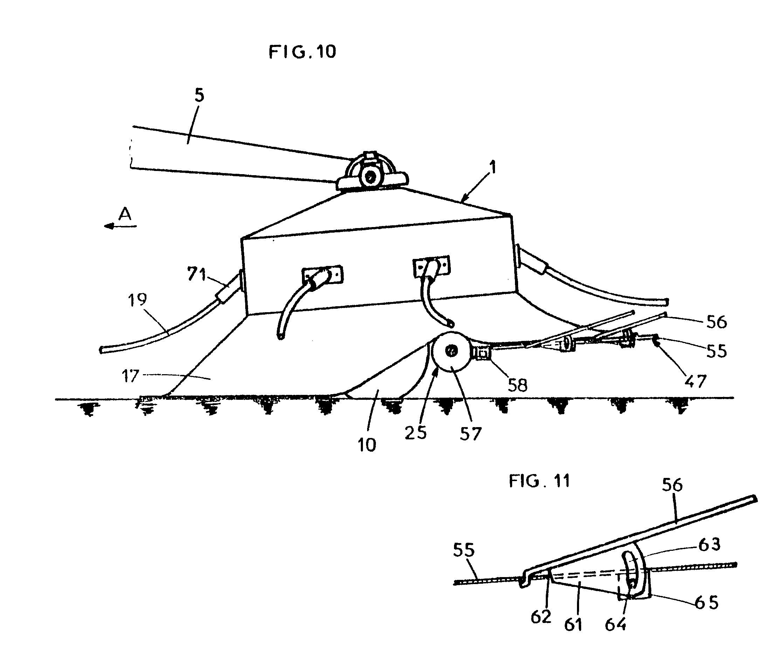

Dans l'exemple de réalisation selon les figures 9 à 11, l'élément de guidage (47) est constitué par une plaque ou tôle (55) sensiblement plate, munie de déflecteurs (56). Cette tôle (55) est disposée derrière un rouleau (57) qui provoque l'élévation des jupes (17 et 18). Elle est fixée à une traverse (58) qui est reliée aux supports latéraux (59 et 60) dudit rouleau (57). La tôle (55) et le rouleau (57) forment ainsi un ensemble dont la position est réglable au moyen des supports latéraux (59 et 60). Cet ensemble est également démontable. Les déflecteurs (56) sont orientés de telle sorte qu'ils répartissent les végétaux sur le côté arrière de la machine. Leur position par rapport à la tôle (55) est avantageusement réglable. A cet effet, chaque déflecteur (56) est articulé à la tôle (55) au moyen de son extrémité avant et comporte un secteur (61) qui s'engage dans une fente (62) prévue dans ladite tôle (voir figure 11). Ce secteur (61) comporte un trou oblong (63) par lequel passe un boulon de serrage (64) qui traverse par ailleurs un plot (65) fixé contre la face inférieure de la tôle (55). Grâce à ce trou oblong (63) et au boulon (64), chaque déflecteur (56) peut être immobilisé dans différentes positions par rapport à la tôle (55). Ces déflecteurs (56) peuvent par exemple être levés tel que représenté sur la figure 11, ou être abaissés de manière à être pratiquement parallèles à la tôle (55). Des positions intermédiaires peuvent également être choisies. Dans la position relevée, ils retiennent davantage les végétaux déplacés. Cette position sera de préférence choisie dans le cas où le volume des végétaux à déplacer est faible, afin d'améliorer la prise des entraîneurs (19 et 20) sur ces végétaux. Par contre, lorsque le volume des végétaux est important il est préférable d'abaisser les déflecteurs (56) pour favoriser leur déplacement.

Il est bien évident que des moyens de guidage (47) peuvent également être associés au rouleau (26) de la figure 4 ou aux galets (38 et 39) de la figure 5.

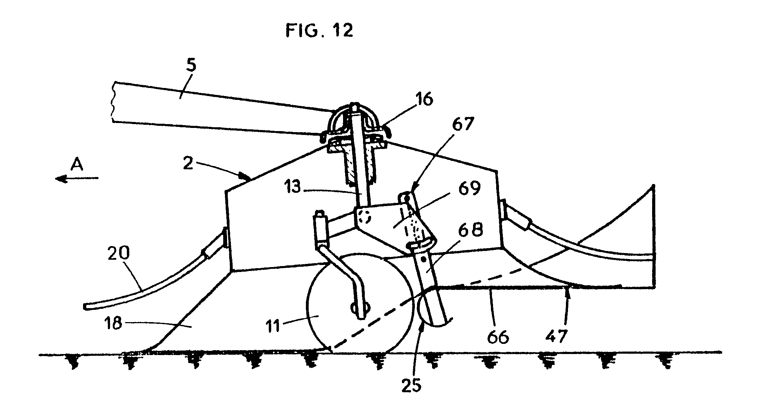

Dans l'exemple de réalisation de la figure 12, les moyens (25) qui provoquent l'élévation des jupes (17 et 18) et l'élément de guidage (47) sont constitués par une même pièce (66). Celle-ci se présente sous la forme d'une tôle dont l'extrémité avant est recourbée vers le bas. Cette extrémité recourbée provoque l'élévation des jupes (17 et 18). La partie située derrière cette extrémité recourbée a un profil en forme de V renversé afin de mieux disperser les végétaux. Elle pourrait aussi être pratiquement plate et comporter des déflecteurs identiques à ceux de l'exemple des figures 9 à 11.

Cette pièce (66) est fixée à des supports latéraux (67). Chacun de ceux-ci se compose d'un longeron (68) et d'une plaque de réglage (69) qui est reliée à l'axe support (12 ou 13) du tambour (1 ou 2) correspondant. La position de cette pièce est réglable au moyen du longeron (68). Elle est également démontable en vue de la réalisation d'autres travaux que le fanage.

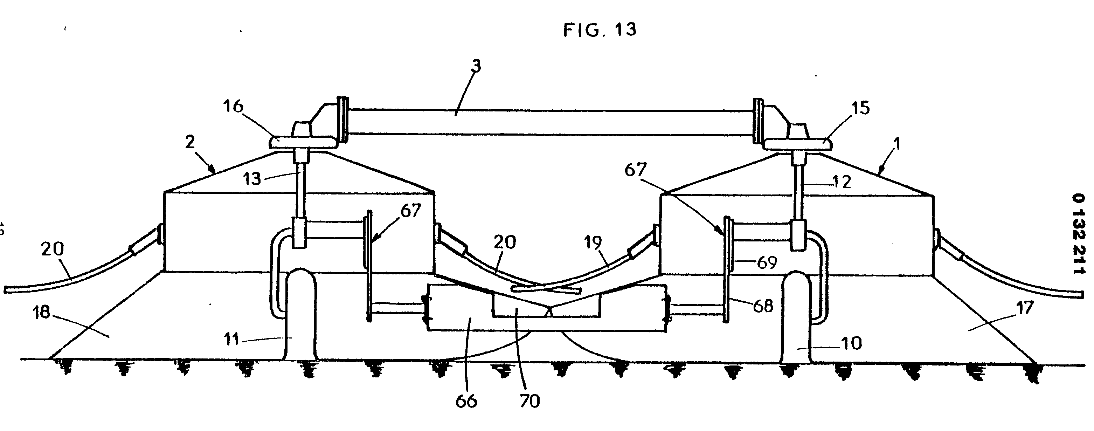

Dans la variante selon la figure 13, la pièce (66) comporte une large gorge centrale (70). Cette gorge permet d'éviter le frottement sur la pièce (66) des parties extérieures des jupes (17 et 18) qui sont en contact avec le sol durant le travail. Il n'y a donc pas une double usure de ces parties extérieures, ce qui prolonge la durée d'utilisation des jupes (17 et 18).

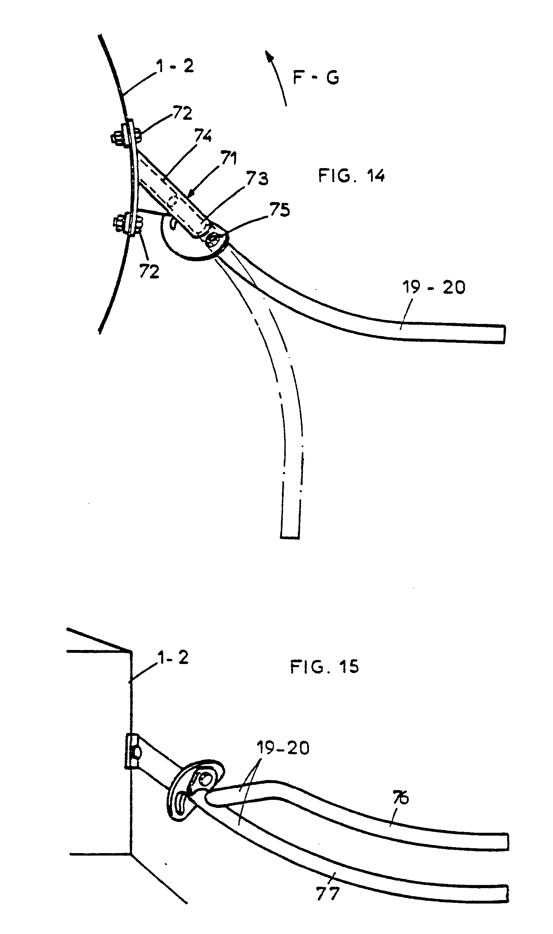

Les entraîneurs (19 et 20) qui sont prévus sur les parois des tambours (1 et 2) sont coudés et sont articulés dans des supports (71) fixés sur lesdits tambours au moyen de boulons (72) (Fig. 14). Chaque entraîneur (19, 20) présente un axe d'articulation (73) engagé dans un logement (74) prévu dans ledit support (71). Cet axe d'articulation (73) se situe dans le prolongement de l'entraîneur (19, 20) correspondant ou lui est pratiquement parallèle. Lesdits logements (74) sont orientés vers la direction opposée au sens de rotation (F ou G) du tambour (1 ou 2) correspondant et vers le bas (voir aussi les figures précédentes).

Ces entraîneurs (19, 20) peuvent être arrêtés dans au moins deux positions différentes par rapport aux tambours (1 et 2). Leur blocage dans chaque position s'effectue au moyen d'un boulon (75). Dans l'une de ces positions, qui est représentée en traits continus sur la figure 14, les extrémités des entraîneurs (19, 20) qui sont dirigées vers les tambours (1 ou 2) sont pratiquement tangentes aux parois de ces derniers et leurs autres extrémités sont pratiquement radiales. En sus, les trajectoires des entraîneurs (19 et 20) de deux tambours voisins se recouvrent partiellement. Cette position convient au fanage vu qu'elle leur permet d'avoir une bonne prise sur les végétaux.

Dans l'autre de ces positions qui est représentée en traits mixtes sur la figure 14, les entraîneurs (19 et 20) sont entièrement dirigés vers le bas et vers la direction opposée au sens de rotation du tambour (1 ou 2) correspondant. Cette position est obtenue en les faisant pivoter d'environ 180° dans les logements (74) des supports (71). Dans cette position les entraîneurs (19, 20) n'accrochent pas les végétaux comme dans la position précédente. En sus, le diamètre de leur trajectoire est réduit de telle sorte qu'il n'y a plus de recouvrement partiel entre les tambours (1 et 2). Cette position sera choisie pour faire de l'andainage ou pour déplacer ou retourner des andains.

Selon la figure 15, chaque entraîneur (19, 20) comporte deux branches (76 et 77) sensiblement parallèles entre elles. Cette constitution augmente l'efficacité de ces entraîneurs.

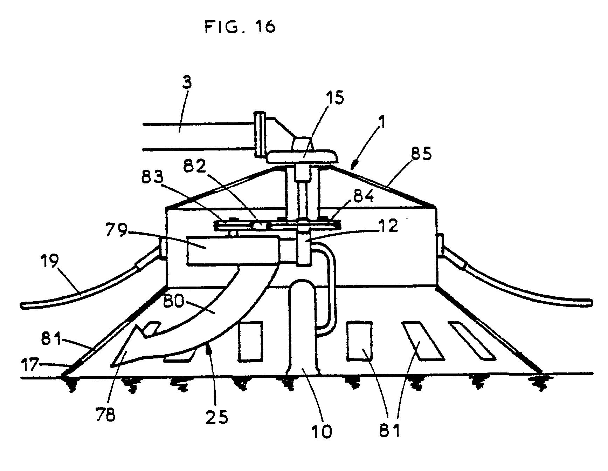

Dans l'exemple de réalisation de la figure 16, les moyens (25) qui provoquent l'élévation des végétaux sont constitués par des buses (78) reliées à des ventilateurs (79) par des conduits (80). Lesdites buses (78) envoient des jets d'air par des orifices (81) prévus dans les jupes (17 et 18). Cet air décolle les végétaux de la face supérieure des jupes (17 et 18) et les amène en contact avec les entraîneurs (19 et 20) en vue du fanage. Pour andainer ces végétaux, il suffit d'arrêter la projection d'air et de modifier la position des entraîneurs (19 et 20) tel que décrit précédemment.

Des éléments de guidage (47) réglables et/ou démontables, similaires à ceux décrits en liaison avec les exemples des figures 6 à 13, peuvent également être prévus sur la machine selon la figure 16.

Tel que cela est représenté sur la figure 16, il est prévu un ventilateur (79) par tambour (1 ou 2). Chaque ventilateur est situé à l'intérieur du tambour (1, 2) correspondant et est relié à l'axe support (12, 13) de ce tambour. L'entraînement du ventilateur (79) est réalisé au moyen d'une courroie (82) passant sur deux poulies (83 et 84). La poulie (84) est liée en rotation au tambour (1, 2) correspondant. La partie supérieure de chaque tambour (1 ou 2) comporte des ouvertures (85) pour permettre l'arrivée d'air au ventilateur (79).

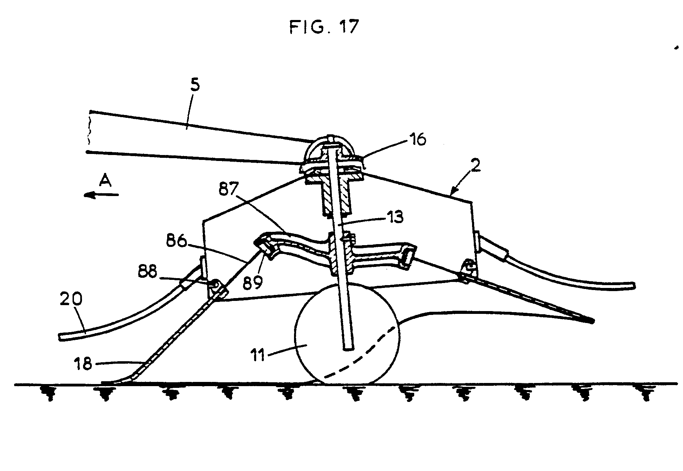

Sur la machine selon l'exemple de réalisation de la figure 17 les moyens (25) pour provoquer l'élévation des végétaux sont constitués par des leviers (86) reliés aux jupes (17, 18) et coopérant avec des cames de guidage (87) immobiles durant le travail. Les jupes (17, 18) sont articulées aux tambours (1, 2) au moyen de pivots (88). Les cames (87) sont fixées sur les axes supports (12, 13) des tambours (1, 2) et présentent une dénivellation vers le bas. Chaque levier (86) comporte à son extrémité dirigée vers la came (87) du tambour (1 ou 2) correspondant, un galet (89) qui se déplace dans ladite came durant la rotation des tambours (1, 2).

Ainsi, lorsque durant le travail les galets (89) passent dans ladite dénivellation, ils déplacent les leviers (86) vers le bas. Ceux-ci font alors pivoter les jupes (17, 18) vers le haut autour des pivots (88). Ce pivotement provoque l'élévation des végétaux se trouvant sur les jupes (17 et 18) de sorte qu'ils puissent être fanés par les entraîneurs (19, 20). Comme dans les exemples précédents, un élément de guidage réglable et démontable (47) peut être associé aux tambours (1, 2) afin de favoriser l'étalement des végétaux.

La came (87) de chaque tambour (1, 2) peut être déplacée angulairement autour de l'axe support (12, 13) correspondant. Ainsi, en déplaçant la dénivellation des cames (87) on peut amener la zone de pivotement des jupes (17, 18) dans la partie arrière des tambours (1 et 2), c'est-à-dire la partie où les végétaux ont déjà quitté les jupes (17, 18). Grâce à ce réglage, on peut supprimer l'élévation du fourrage dans la zone située entre les tambours (1, 2). Cette position convient pour déposer les végétaux sous la forme d'un andain ou pour déplacer ou retourner des andains déjà formés. Dans ce cas les entraîneurs (19, 20) pourront également être amenés dans une position où ils sont moins agressifs à l'égard du fourrage.

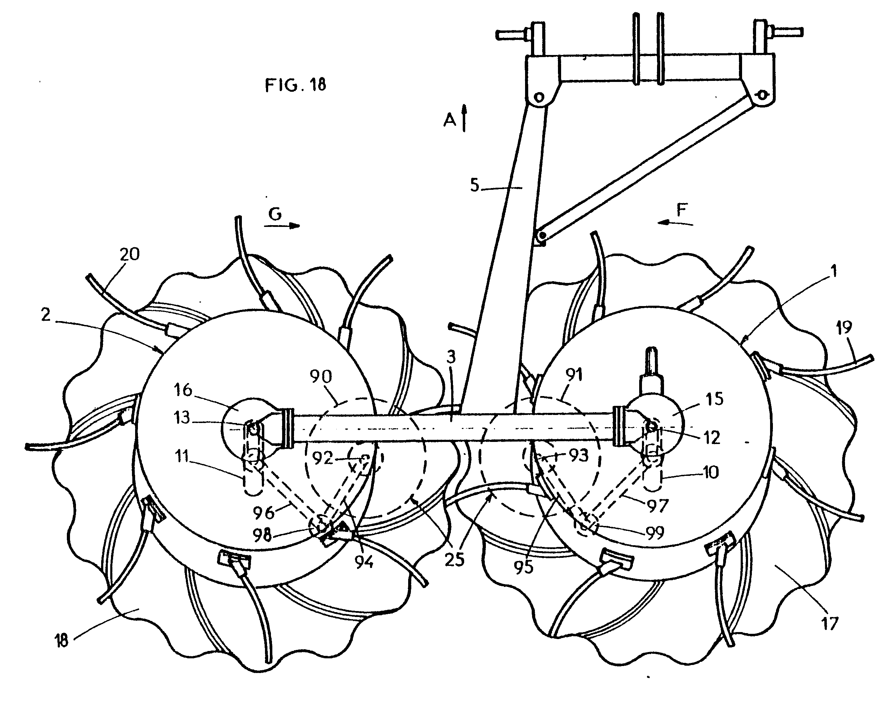

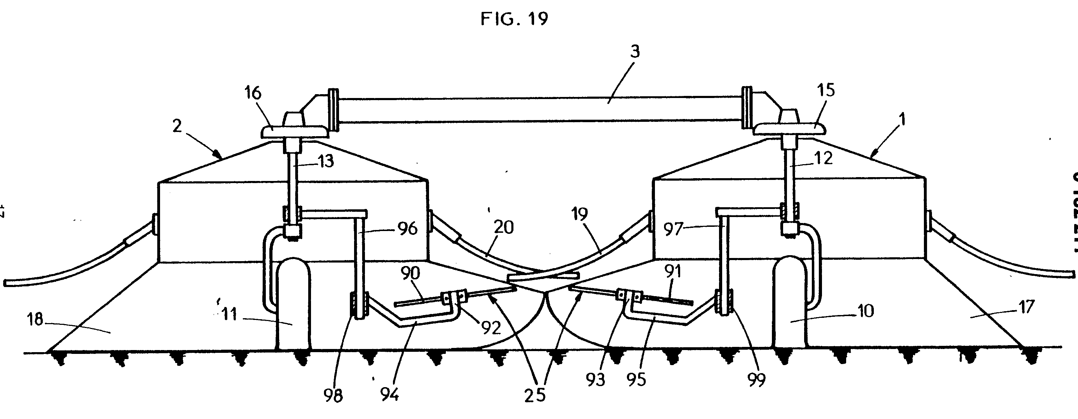

Dans l'exemple de réalisation selon les figures 18 et 19, les moyens (25) qui soulèvent les jupes (17 et 18) sont constitués par des disques ou assiettes (90 et 91). Ces disques (90 et 91) sont montés libre en rotation sur des axes (92 et 93) légèrement inclinés. Lesdits axes sont solidaires de bras (94 et 95) qui sont articulés sur des supports coudés (96 et 97). Ces derniers sont reliés aux axes (12 et 13) des tambours (1 et 2). Ces supports (96 et 97) peuvent être réglés dans différentes positions autour des axes (12 et 13) pour faire varier la position des disques (90 et 91) dans un plan sensiblement horizontal. Ils peuvent aussi être déplacés le long de ces axes (12 et 13) en vue de faire varier la position des disques (90 et 91) en hauteur. L'immobilisation de ces supports (96 et 97) dans la position choisie peut s'effectuer au moyen de vis de pression non représentées.

Les bras (94 et 95) peuvent également être déplacés autour de leurs articulations (98 et 99) avec les supports coudés (96 et 97) en vue d'un réglage supplémentaire de la position des disques (90 et 91). L'immobilisation de ces bras (94 et 95) peut également s'effectuer au moyen de vis de pression.

Les bras (94 et 95) et les supports coudés (96 et 97) sont avantageusement disposés en forme de V (voir figure 18). Cet agencement offre un important choix de positions dans lesquelles on peut amener les disques (90 et 91).

Lesdits disques (90 et 91) peuvent aussi être déplacés vers le milieu de chaque tambour (1 et 2) et/ou vers le bas afin qu'ils ne soulèvent plus, ou pratiquement plus, les jupes (17 et 18) durant le travail. Dans cette position la machine pourra être utilisée pour d'autres opérations telles que l'andainage ou le retournement d'andains. Il est évident qu'on peut aussi démonter les disques (90 et 91) si on veut supprimer leur action sur les jupes (17 et 18).

Ces disques (90 et 91) ont l'avantage d'avoir une hauteur très faible. De ce fait, ils sont relativement éloignés du sol et sont moins exposés aux chocs contre des obstacles se trouvant sur le sol. De plus, dans cet exemple de réalisation, il n'y a pas de pièce traversant l'intervalle entre les deux jupes (17 et 18). Il n'y a donc pas de risque d'accumulation de fourrage à cet endroit.

Comme dans les exemples décrits précédemment, on peut associer un élément de guidage réglable et démontable (47) aux tambours (1 et 2) afin de favoriser l'étalement des végétaux.

Il est bien évident qu'on pourra faire varier le nombre de tambours par machine. On pourra également apporter aux exemples de réalisation décrits ci-dessus de manière nullement limitative, divers perfectionnements, modifications ou additions, ou remplacer certains éléments par des éléments équivalents sans pour autant sortir du cadre de la présente invention, telle que définie dans les revendications.

**Revendications**

1. Machine de fenaison comportant au moins deux tambours (1, 2) munis à leur partie inférieure d'une jupe souple (17, 18) et d'éléments entraîneurs (19, 20) des végétaux répartis sur leur périphérie, lesdits tambours (1, 2) ramassant et déplaçant les végétaux couchés sur le sol, caractérisée par le fait qu'elle comporte des moyens (25) situés au moins partiellement sous les jupes (17, 18) et qui provoquent en coopération avec les jupes (17, 18) une élévation desdits végétaux dans une zone située entre les tambours (1 et 2) de manière à amener ces végétaux en contact avec les entraîneurs (19, 20) assurant leur fanage.

2. Machine selon la revendication 1, caractérisée par le fait que la hauteur (H) de l'élévation par rapport au sol est au moins égale à 8 centimètres.

3. Machine selon la revendication 1 ou 2, caractérisée par le fait que lesdits moyens (25) sont constitués par un dispositif soulevant les jupes (17, 18) des tambours (1, 2) dans une zone située entre ces tambours et l'arrière d'un plan (P) passant par les axes (12 et 13) de ces derniers.

4. Machine selon la revendication 3, caractérisée par le fait que les moyens (25) sont constitués par au moins un rouleau (26, 48, 57).

5. Machine selon la revendication 4, caractérisée par le fait que le rouleau (26, 48, 57) est libre en rotation.

6. Machine selon la revendication 5, caractérisée par le fait que le rouleau (26, 48, 57) comporte un axe (27) dont les extrémités sont logées dans des supports (28, 29) reliés aux axes (12, 13) des tambours (1, 2).

7. Machine selon l'une quelconque des revendications 4 à 6, caractérisée par le fait que la position du rouleau (26, 48, 57) est réglable.

8. Machine selon l'une quelconque des revendications 4 à 7, caractérisée par le fait que le rouleau (26, 48, 57) est démontable.

9. Machine selon l'une quelconque des revendications 4 à 8, caractérisée par le fait que le rouleau (26, 48, 57) comporte une gorge centrale (35).

10. Machine selon la revendication 9, caractérisée par le fait que le rouleau (26, 48, 57) comporte des surfaces inclinées (36 et 37) en contact avec les jupes (17 et 18).

11. Machine selon l'une quelconque des revendications 1 à 3, caractérisée par le fait que les moyens (25) qui soulèvent les jupes (17 et 18) sont constitués par des roues ou galets (38 et 39).

12. Machine selon la revendication 11, caractérisée par le fait que la position des roues ou galets (38 et 39) est réglable.

13. Machine selon la revendication 11 ou 12, caractérisée par le fait que les roues ou galets (38 et 39) sont démontables.

14. Machine selon la revendication 1 ou 2, caractérisée par le fait que les moyens (25) sont constitués par des buses (78) reliées à des ventilateurs (79), lesquelles buses envoient des jets d'air par des orifices (81) prévus dans les jupes (17, 18).

15. Machine selon la revendication 14, caractérisée par le fait que les ventilateurs (79) sont disposés dans les tambours (1, 2).

16. Machine selon l'une quelconque des revendications 1 à 3, caractérisée par le fait que les moyens (25) sont constitués par des leviers (86) qui coopèrent avec des cames (87) en vue de soulever les jupes (17, 18) dans la zone située entre les tambours (1, 2).

17. Machine selon la revendication 16, caractérisée par le fait que les cames (87) sont déplaçables angulairement par rapport aux tambours (1, 2).

18. Machine selon l'une quelconque des revendications 1 à 3, caractérisée par le fait que les moyens (25) qui soulèvent les jupes (17 et 18) sont constitués par des disques ou assiettes (90 et 91).

19. Machine selon la revendication 18, caractérisée par le fait que la position des disques (90 et 91) est réglable.

20. Machine selon la revendication 19, caractérisée par le fait que les disques (90 et 91) sont tenus au moyen de bras (94 et 95) et de supports (96 et 97) articulés entre eux et disposés en forme de V.

21. Machine selon la revendication 20, caractérisée par le fait que les supports (96 et 97) auxquels sont reliés les bras (94 et 95) portant les disques (90 et 91) sont déplaçables par rapport aux axes (12 et 13) des tambours (1 et 2).

22. Machine selon la revendication 18, caractérisée par le fait que les disques (90 et 91) sont démontables.

23. Machine selon l'une quelconque des revendications précédentes, caractérisée par le fait qu'un élément de guidage (47) des végétaux est associé aux moyens (25) provoquant l'élévation des végétaux.

24. Machine selon la revendication 23, caractérisée par le fait que l'élément de guidage (47) est constitué par une tôle déflectrice (49) s'étendant vers l'arrière à partir de la zone d'élévation des végétaux.

25. Machine selon la revendication 23 ou 24, caractérisée par le fait que la partie arrière (54) de l'élément de guidage (47) est plus large et plus élevée que sa partie avant.

26. Machine selon la revendication 23, 24 ou 25, caractérisée par le fait que l'élément de guidage (47) a une section en forme de V dont la pointe est dirigée vers le haut.

27. Machine selon la revendication 23, caractérisée par le fait que l'élément de guidage (47) est constitué par une plaque sensiblement plate (55) munie de déflecteurs (56).

28. Machine selon la revendication 27, caractérisée par le fait que la position des déflecteurs (56) est réglable.

29. Machine selon l'une quelconque des revendications 1 à 3 et 23, caractérisée par le fait que les moyens (25) qui provoquent l'élévation des végétaux et l'élément de guidage (47) sont constitués par une même pièce (66).

30. Machine selon la revendication 29, caractérisée par le fait que l'extrémité avant de la pièce (66) est recourbée vers le bas.

31. Machine selon la revendication 29 ou 30, caractérisée par le fait que la pièce (66) comporte une gorge centrale (70).

32. Machine selon l'une quelconque des revendications 23 à 31, caractérisée par le fait que la position de l'élément de guidage (47) est réglable.

33. Machine selon l'une quelconque des revendications 23 à 32, caractérisée par le fait que l'élément de guidage est démontable.

34. Machine selon l'une quelconque des revendications précédentes, caractérisée par le fait que chaque entraîneur (19, 20) est articulé sur son tambour (1 ou 2) au moyen d'un axe (73) situé dans son prolongement ou qui lui est pratiquement parallèle.

35. Machine selon la revendication 34, caractérisée par le fait que les logements (74) des axes d'articulation (73) des entraîneurs (19, 20) sont dirigés vers la direction opposée au sens de rotation du tambour (1 ou 2) correspondant et vers le bas.

36. Machine selon l'une quelconque des revendications précédentes, caractérisée par le fait que dans la position de fanage les extrémités des entraîneurs (19, 20) qui sont dirigées vers les tambours (1, 2), sont pratiquement tangentes aux parois de ces derniers et que leurs autres extrémités sont pratiquement radiales.

37. Machine selon l'une quelconque des revendications 34 à 36, caractérisée par le fait que chaque entraîneur (19, 20) comporte plusieurs branches (76, 77) sensiblement parallèles entre elles.

## Claims

1. A haymaking machine having at least two drums (1, 2) equipped at the lower part of them each with a flexible skirt (17, 18) and members (19, 20) distributed round their periphery for driving the crop along, the said drums (1, 2) gathering up and moving the crop lying on the ground, characterized by the fact that it includes means (25) which are located at least partially under the skirts (17, 18) and which by cooperating with the skirts (17, 18) cause the raising of the said crop into a zone situated between the drums (1 and 2) so as to bring this crop into contact with the driving members (19, 20) to ensure the tedding of it.

2. A machine as in Claim 1, characterized by the fact that the height (H) by which the crop is raised with respect to the ground is equal to at least 8 centimetres.

3. A machine as in Claim 1 or 2, characterized by the fact that the said means (25) consist of a device which lifts the skirts (17, 18) of the drums (1, 2) into a zone situated between these drums and behind a plane (P) passing through the axes (12 and 13) of the latter.

4. A machine as in Claim 3, characterized by the fact that the means (25) consist of at least one cylinder (26, 48, 57).

5. A machine as in Claim 4, characterized by the fact that the cylinder (26, 48, 57) is free to rotate.

6. A machine as in Claim 5, characterized by the fact that the cylinder (26, 48, 57) has an axle (27) the ends of which are seated in supports (28, 29) connected to the axes (12, 13) of the drums (1, 2).

7. A machine as in any one of the Claims 4 to 6, characterized by the fact that the position of the cylinder (26, 48, 57) is adjustable.

8. A machine as in any one of the Claims 4 to 7, characterized by the fact that the cylinder (26, 48, 57) is removable.

9. A machine as in any one of the Claims 4 to 8, characterized by the fact that the cylinder (26, 48, 57) includes a central groove (35).

10. A machine as in Claim 9, characterized by the fact that the cylinder (26, 48, 57) includes sloping areas (36 and 37) in contact with the skirts (17 and 18).

11. A machine as in any one of the Claims 1 to 3, characterized by the fact that the means (25) which lift the skirts (17 and 18) consist of wheels or rollers (38 and 39).

12. A machine as in Claim 11, characterized by the fact that the position of the wheels or rollers (38 and 39) is adjustable.

13. A machine as in Claim 11 or 12, characterized by the fact that the wheels or rollers (38 and 39) are removable.

14. A machine as in Claim 1 or 2, characterized by the fact that the means (25) consist of nozzles (78) connected to fans (79), these nozzles sending jets of air through apertures (81) provided in the skirts (17, 18).

15. A machine as in Claim 14, characterized by the fact that the fans (79) are arranged in the drums (1, 2).

16. A machine as in any one of the Claims 1 to 3, characterized by the fact that the means (25) consist of levers (86) which cooperate with cams (87) with a view to lifting the skirts (17, 18) in the zone situated between the drums (1, 2).

17. A machine as in Claim 16, characterized by the fact that the cams (87) are displaceable angularly with respect to the drums (1, 2).

18. A machine as in any one of the Claims 1 to 3, characterized by the fact that the means (25) which lift the skirts (17 and 18) consist of discs or dishes (90 and 91).

19. A machine as in Claim 18, characterized by the fact that the position of the discs (90 and 91) is adjustable.

20. A machine as in Claim 19, characterized by the fact that the discs (90 and 91) are held up by means of arms (94 and 95) and supports (96 and 97) hinged together and arranged in the shape of a V.

21. A machine as in Claim 20, characterized by the fact that the supports (96 and 97) to which are connected the arms (94 and 95) carrying the discs (90 and 91) are movable with respect to the axes (12 and 13) of the drums (1 and 2).

22. A machine as in Claim 18, characterized by the fact that the discs (90 and 91) are removable.

23. A machine as in any one of the preceding Claims, characterized by the fact that a member (47) for guidance of the crop is associated with the means (25) causing the raising of the crop.

24. A machine as in Claim 23, characterized by the fact that the guide member (47) consists of a deflector plate (49) extending towards the rear from the zone of raising of the crop.

25. A machine as in Claim 23 or 24, characterized by the fact that the rear portion (54) of the guide member (47) is wider and higher than its front portion.

26. A machine as in Claim 23, 24 or 25, characterized by the fact that the guide member (47) has a V-shaped cross-section the apex of which is directed upwards.

27. A machine as in Claim 23, characterized by the fact that the guide member (47) consists of a substantially flat plate (55) equipped with deflectors (56).

28. A machine as in Claim 27, characterized by the fact that the position of the deflectors (56) is adjustable.

29. A machine as in any one of the Claims 1 to 3 and 23, characterized by the fact that the means (25) which cause the raising of the crop and the guide member (47) consist of one and the same piece (66).

30. A machine as in Claim 29, characterized by the fact that the front end of the piece (66) is curved downwards.

31. A machine as in Claim 29 or 30, characterized by the fact that the piece (66) includes a centralgroove (70).

32. A machine as in any one of the Claims 23 to 31, characterized by the fact that the position of the guide member (47) is adjustable.

33. A machine as in any one of the Claims 23 to 32, characterized by the fact that the guide member is removable.

34. A machine as in any one of the preceding Claims, characterized by the fact that each driving member (19, 20) is hinged onto its drum (1 or 2) by means of a pin (73) which is located in prolongation of it or which is practically parallel with it.

35. A machine as in Claim 34, characterized by the fact that the seats (74) of the hingepins (73) of the driving members (19, 20) are directed towards the direction opposed to the direction of rotation of the corresponding drum (1 or 2) and downwards.

36. A machine as in any one of the preceding Claims, characterized by the fact that in the tedding position the ends of the driving members (19, 20) which are directed towards the drums (1, 2) are practically tangential to the walls of the latter and that their other ends are practically radial.

37. A machine as in any one of the Claims 34 to 36, characterized by the fact that each driving member (19, 20) includes a number of branches (76, 77) substantially parallel with one another.

## Patentansprüche

1. Heuwerbungsmaschine mit mindestens zwei Trommeln (1, 2), die an ihrem unteren Teil einen geschmeidigen Ringkragen (17, 18) und auf ihrem Umfang verteilte Mitnehmer (19, 20) besitzen, wobei diese Trommeln (1, 2) die auf dem Boden liegenden Pflanzen aufnehmen und versetzen, dadurch gekennzeichnet, dass sie Mittel (25) besitzt, die sich mindestens teilweise unter den Ringkragen (17, 18) befinden und in Mitwirkung der Ringkragen (17, 18) eine Steigung der Pflanzen in einem Bereich zwischen den Trommeln (1 und 2) provozieren um diese Pflanzen in Berührung mit den Mitnehmer (19, 20) zu bringen, die ihr Zetten bzw. Wenden bewirken.

2. Maschine nach dem Anspruch 1, dadurch gekennzeichnet, dass die Höhe (4) der Steigung gegenüber dem Boden mindestens 8 Zentimeter beträgt.

3. Maschine nach dem Anspruch 1 oder 2, dadurch gekennzeichnet, dass die Mittel (25) durch eine Vorrichtung gebildet sind, die die Ringkragen (17, 18) der Trommeln (1, 2) erheben im Bereich zwischen diesen Trommeln und hinter einer Ebene (P) die die Achsen (12 und 13) der Trommeln enthält.

4. Maschine nach dem Anspruch 3, dadurch gekennzeichnet, dass die Mittel (25) durch mindestens eine Walze (26, 48, 57) gebildet sind.

5. Maschine nach dem Anspruch 4, dadurch gekennzeichnet, dass die Walze (26, 48, 57) frei drehbar ist.

6. Maschine nach dem Anspruch 5, dadurch gekennzeichnet, dass die Walze (26, 48, 57) eine Welle (27) besitzt, deren Enden in Träger (28, 29) gelagert sind, die mit den Achsen (12, 13) der Trommeln (1, 2) verbunden sind.

7. Maschine nach irgend einem der Ansprüche 4 bis 6, dadurch gekennzeichnet, dass die Stellung der Walze (26, 48, 57) einstellbar ist.

8. Maschine nach irgend einem der Ansprüche 4 bis 7, dadurch gekennzeichnet, dass die Walze (26, 48, 57) abnehmbar ist.

9. Maschine nach irgend einem der Ansprüche 4 bis 8, dadurch gekennzeichnet, dass die Walze (26, 48, 57) einen Mittelausschnitt (35) aufweist.

10. Maschine nach dem Anspruch 9, dadurch gekennzeichnet, dass die Walze (26, 48, 57) geneigte Flächen (36 und 37) aufweist, die mit den Ringkragen (17 und 18) in Berührung sind.

11. Maschine nach irgend einem der Ansprüche 1 bis 3, dadurch gekennzeichnet, dass die Mittel (25), die die Ringkragen (17 und 18) erheben durch Räder oder Rollen (38 und 39) gebildet sind.

12. Maschine nach dem Anspruch 11, dadurch gekennzeichnet, dass die Stellung der Räder oder Rollen (38 und 39) einstellbar ist.

13. Maschine nach dem Anspruch 11 oder 12, dadurch gekennzeichnet, dass die Räder oder Rollen (38 und 39) abnehmbar sind.

14. Maschine nach dem Anspruch 1 oder 2, dadurch gekennzeichnet, dass die Mittel (25) aus mit Ventilatoren (79) verbundenen Düsen (78) bestehen, wobei diese Düsen Luftstrahlen durch Öffnungen (81) in den Ringkragen (17, 18) dirigieren.

15. Maschine nach dem Anspruch 14, dadurch gekennzeichnet, dass die Ventilatoren (79) in den Trommeln (1, 2) angeordnet sind.

16. Maschine nach irgend einem der Ansprüche 1 bis 3, dadurch gekennzeichnet, dass die Mittel (25) aus Hebeln (86) bestehen, die mit Steuerkurven (87) zusammenwirken um die Ringkragen (17, 18) im Bereich zwischen den Trommeln (1, 2) zu erheben.

17. Maschine nach dem Anspruch 16, dadurch gekennzeichnet, dass die Steuerkurven (87) in Bezug auf die Trommeln (1, 2) winkelig verstellbar sind.

18. Maschine nach irgend einem der Ansprüche 1 bis 3, dadurch gekennzeichnet, dass die Mittel (25) die die Ringkragen (17 und 18) erheben aus Scheiben oder Teller (90 und 91) bestehen.

19. Maschine nach dem Anspruch 18, dadurch gekennzeichnet, dass die Stellung der Scheiben (90 und 91) einstellbar ist.

20. Maschine nach dem Anspruch 19 dadurch gekennzeichnet, dass die Scheiben (90 und 91) mittels Arme (94 und 95) und Träger (96 und 97) gehalten sind die miteinander gelenkig verbunden und V-förmig angeordnet sind.

21. Maschine nach dem Anspruch 20, dadurch gekennzeichnet, dass die Träger (96 und 97) mit welchen die Tragarme (94 und 95) der Scheiben (90 und 91) verbunden sind verstellbar sind in Bezug auf die Achsen (12 und 13) der Trommeln (1 und 2).

22. Maschine nach dem Anspruch 18, dadurch gekennzeichnet, dass die Scheiben (90 und 91) abnehmbar sind.

23. Maschine nach irgend einem der vorstehenden Ansprüche, dadurch gekennzeichnet, dass ein Führungselement (47) für die Pflanzen, den Mittel (25) die die Steigung der Pflanzen provozieren, zugeordnet ist.

24. Maschine nach dem Anspruch 23, dadurch gekennzeichnet, dass das Führungselement (47) aus einem Ablenkblech (49) besteht, das sich von dem Bereich der Steigung der Pflanzen nach hinten erstreckt.

25. Maschine nach dem Anspruch 23 oder 24, dadurch gekennzeichnet, dass das hintere Teil (54) des Führungselements (47) breiter und höher ist als sein vorderes Teil.

26. Maschine nach dem Anspruch 23, 24 oder 25, dadurch gekennzeichnet, dass das Führungselement (47) einen V-förmigen Querschnitt aufweist, dessen Spitze nach oben weist.

27. Maschine nach dem Anspruch 23, dadurch gekennzeichnet, dass das Führungselement (47) durch eine nahezu flache Platte (55) mit Abweiser (56) gebildet ist.

28. Maschine nach dem Anspruch 27, dadurch gekennzeichnet, dass die Stellung der Abweiser (56) einstellbar ist.

29. Maschine nach irgend einem der Ansprüche 1 bis 3 und 23, dadurch gekennzeichnet, dass die Mittel (25) die die Steigung der Pflanzen provozieren und das Führungselement (47) durch den selben Teil (66) gebildet sind.

30. Maschine nach dem Anspruch 29, dadurch gekennzeichnet, dass das vordere Ende des Teils (66) nach unten gebogen ist.

31. Maschine nach dem Anspruch 29 oder 30, dadurch gekennzeichnet, das der Teil (66) einen Mittelausschnitt (70) aufweist.

32. Maschine nach irgend einem der Ansprüche 23 bis 31, dadurch gekennzeichnet, dass die Stellung des Führungselements (47) einstellbar ist.

33. Maschine nach irgend einem der Ansprüche 23 bis 32, dadurch gekennzeichnet, dass das Führungselement abnehmbar ist.

34. Maschine nach irgend einem der vorstehenden Ansprüche, dadurch gekennzeichnet, dass jeder Mitnehmer (19, 20) auf seiner Trommel (1 oder 2) angelenkt ist, mittels einem Bolzen (73), der in seiner Verlängerung oder nahezu parallel zu ihm angeordnet ist.

35. Maschine nach dem Anspruch 34, dadurch gekennzeichnet, dass die Lager (74) der Bolzen (73) der Mitnehmer (19, 20) nach der der Drehrichtung der Trommeln (1 oder 2) entgegengesetzten Richtung und nach unten gerichtet sind.

36. Maschine nach irgend einem der vorstehenden Ansprüche, dadurch gekennzeichnet, dass in der Zett-Wendestellung die Enden der Mitnehmer (19, 20), die nach den Trommeln (1, 2) gerichtet sind, nahezu tangierend zu den Wänden der Trommeln und deren anderen Enden nahezu radial ausgerichtet sind.

37. Maschine nach irgend einem der Ansprüche 34 bis 36, dadurch gekennzeichnet, dass jeder Mitnehmer (19, 20) mehrere Schenkel (76, 77) besitzt, die nahezu parallel zueinander sind.

FIG. 1

0 132 211

FIG.2

0 132 211

FIG. 3

FIG. 4

0 132 211

FIG. 5

FIG. 6

0 132 211

FIG.7

FIG. 8

0 132 211

FIG. 9

0 132 211

FIG.10

FIG. 11

FIG. 12

FIG. 13

0 132 211

1 - 2

72

74

71

73

75

F - G

FIG. 14

72

19 - 20

1 - 2

FIG. 15

19 - 20

76

77

FIG. 16

FIG. 17

FIG. 18

FIG. 19